# EUROPEAN PATENT SPECIFICATION

(11) **EP 3 098 465 B1**
(45) Date of publication and mention of the grant of the patent: **02.10.2019**
(21) Application number: 16174154.1
(22) Date of filing: 19.12.2012
(51) Int. Cl.: F16C 17/18, F16C 33/10, F16C 17/02

(54) **FLOATING BUSH BEARING DEVICE AND SUPERCHARGER INCLUDING THE SAME**
SCHWIMMENDE BUCHSENLAGERVORRICHTUNG UND LADER MIT EINER SOLCHEN SCHWIMMENDEN BUCHSENLAGERVORRICHTUNG
DISPOSITIF DE PALIER À DOUILLE FLOTTANTE ET COMPRESSEUR DE SURALIMENTATION COMPRENANT CELUI-CI

(43) Date of publication of application: 30.11.2016
(62) Divisional of application: 12890467.9
(73) Proprietor: MITSUBISHI HEAVY INDUSTRIES, LTD., Tokyo (JP)
(72) Inventor: FUTAE, Takaya, Tokyo, 108-8215 (JP); KANKI, Hiroshi, Tokyo, 108-8215 (JP); HAYASHI, Noriyuki, Tokyo, 108-8215 (JP); NISHIDA, Hideaki, Tokyo, 108-8215 (JP); OGAWA, Shinji, Tokyo, 108-8215 (JP); YASUDA, Chiaki, Hiroshima-shi Hiroshima, 733-0036 (JP); OZAWA, Yutaka, Takasago-shi Hyogo, 676-0017 (JP)
(74) Representative: Mader, Joachim

(56) References cited:
- EP-A2- 0 856 673
- WO-A1-2012/132586
- DE-A1- 2 906 167
- DE-A1- 3 936 069
- FR-A1- 2 616 861
- JP-A- H01 193 409
- JP-A- 2009 167 872
- US-A1- 2010 166 347
- US-B1- 7 429 132

## Description

### TECHNICAL FIELD

The present invention relates to a floating bush bearing device which rotatably supports a rotation shaft and a supercharger including the floating bush bearing device.

### BACKGROUND

A floating bush bearing device has been known which is formed by rotatably disposing a floating bush between a bearing housing and a rotation shaft in a bearing device rotatably supporting the rotation shaft (for example, see Japanese Patent Application Laid-Open No. 2012-207584). In the floating bush bearing device, an oil film is formed by supplying lubricating oil into a clearance between the bearing housing and the floating bush, and into a clearance between the floating bush and the rotation shaft. The rotation shaft is rotatably supported by the oil film formed in the clearances.

A floating bush bearing of an exhaust turbo-charger having an oval shaped bushing is known from the document DE 39 36 069 A1. A further floating bush bearing having a circular outer circumferential surface is known from the document JP H01 193409 A showing the preamble of claim 1. The document FR 2 616 861 A1 shows a hydrodynamic bearing in which a rotor has an outer circumference with lugs.

### SUMMARY

### Technical Problem

In a conventional floating bush bearing device, inner and outer circumferential surfaces of the rotation shaft and the floating bush as well as an inner circumferential surface of the bearing housing each have a circular lateral cross-sectional shape. The present inventors have found out that asynchronous oscillation, not in synchronization with the rotation of the rotation shaft, is likely to occur in such a conventional floating bush bearing device. The asynchronous oscillation is particularly likely to occur in a small supercharger mounted in an automobile engine for example.

At least one embodiment of the present invention is made in view of the problem in the conventional device described above, and an object of the present invention is to provide a floating bush bearing device with excellent oscillation stability and small bearing loss, and a supercharger including the floating bush bearing device.

### Solution to Problem

To achieve the object described above, there is provided a floating bush bearing according to claim 1, thus, the present invention provides a floating bush bearing device which rotatably supports a rotation shaft, the floating bush bearing device including: a bearing housing, a floating bush rotatably disposed between the rotation shaft and an inner circumferential surface of the bearing housing, in the bearing housing, and a bush side oil supply hole which is formed through the floating bush and is capable of supplying lubricating oil between the rotation shaft and the inner circumferential surface of the floating bush. The inner circumferential surface of the floating bush has a non-circular shape so that a gap portion is formed between the rotation shaft and the inner circumferential surface of the floating bush, the gap portion having a predetermined clearance or larger regardless of relative positions of the rotation shaft and the inner circumferential surface of the floating bush. The bush side oil supply hole communicates with the gap portion.

In such a floating bush bearing device, the inner circumferential surface of the floating bush has the non-circular shape, so that the clearance between the inner circumferential surface of the floating bush and the rotation shaft is non-uniform in the circumference direction, and the gap portion having a predetermined clearance or larger regardless of relative positions of the rotation shaft and the inner circumferential surface of the floating bush is formed. Thus, a cross section is reduced with respect to a bearing dynamic characteristic direct section, whereby the oscillation stability of the bearing device can be improved. Furthermore, a larger average clearance between the rotation shaft and the inner circumferential surface of the floating bush can be achieved, whereby a bearing loss can be reduced compared with a case where the inner circumferential surface of the floating bush has a perfect circle shape.

The bush side oil supply hole is in communication with the gap portion, whereby higher oil supply characteristics on the inner side of the floating bush can be achieved, the oscillation stability can be improved, and the bearing loss can be reduced.

The inner circumferential surface of the floating bush has a multi-arc shape, formed by combining a plurality of arcs with different center points.

In such a configuration, the inner circumferential surface of the floating bush described above can geometrically easily be formed to have a non-circular shape. Furthermore, for example, the clearance between the rotation shaft and the inner circumferential surface of the floating bush can be more gently changed, compared with a case where the inner circumferential surface of the floating bush has recesses and protrusions.

In one embodiment of the present invention, recess portions, having different areas, are respectively formed on a load direction side of the rotation shaft and a side opposite to the load direction side, in the inner circumferential surface of the bearing housing, and one of the recess portions with a larger area communicates with a housing side oil supply hole which is formed through the bearing housing and is capable of supplying lubricating oil between an outer circumferential surface of the floating bush and the inner circumferential surface of the bearing housing.

In such a configuration, the housing side oil supply hole is in communication with the recess portion having a larger area, whereby the floating bush is pushed toward the floating bush having a smaller area due to the difference between the two recess portions in the oil supply pressure (oil supply pressure = oil pressure × area). As a result, even higher eccentricity ratio of the floating bush can be achieved, whereby the oscillation stability of the bearing can be improved.

The recess portions are respectively formed on the load direction side of the rotation shaft and the side opposite to the load direction side. Thus, the first recess portion and the second recess portion each function as an oil reservoir, whereby higher oil supply characteristics on the inner side of the floating bush can be achieved.

In one embodiment of the present invention, an oil groove is formed in the inner circumferential surface of the bearing housing, the oil groove connecting between the two recess portions respectively formed on the load direction side of the rotation shaft and the side opposite to the load direction side.

In such a configuration, the lubricating oil can be further supplied into the second recess portion, which is not in communication with the housing side oil supply hole, through the oil groove, whereby higher oil supply characteristics on the inner side of the floating bush can be achieved.

In one embodiment of the present invention, the housing side oil supply hole communicates with a first recess portion formed on the side opposite to the load direction side of the rotation shaft in the inner circumferential surface of the bearing housing.

In such a configuration, the housing side oil supply hole is in communication with the first recess portion formed on the side opposite to the load direction side of the rotation shaft. Thus, the rotation shaft is further pushed in the load direction thereof due to the above-described difference between the first recess portion and the second recess portion in the oil supply pressure. As a result, even higher eccentricity ratio of the floating bush can be achieved, whereby the oscillation stability of the bearing can be improved.

In one embodiment of the present invention, the housing side oil supply hole communicates with a second recess portion on the load direction side of the rotation shaft in the inner circumferential surface of the bearing housing.

In such a configuration, the housing side oil supply hole is in communication with the second recess portion formed on the load direction side of the rotation shaft, whereby floating of the floating bush can be easily achieved, and the startability can be improved.

In one embodiment of the present invention, a circumference direction groove, extending along a circumference direction, is formed in the outer circumferential surface of the floating bush.

In such a configuration, a friction torque on the outer circumferential surface of the floating bush is reduced, so that the rotation speed of the floating bush increases, whereby the bearing loss on the inner side of the floating bush can be reduced. The circumference direction groove provides a squeezing effect to achieve higher reduction effect of the lubricating oil. All things considered, the oscillation stability is improved.

In one embodiment of the present invention, a plurality of partial grooves are formed in the outer circumferential surface of the floating bush, and the bush side oil supply hole communicates with the partial holes.

In such a configuration, the higher oil supply characteristics on the inner side of the floating bush can be achieved, the oscillation stability can be improved, and the bearing loss can be reduced.

In one embodiment of the present invention, the partial grooves have a V shape in a plan view formed by two groove portions intersecting with each other, each of two groove portions extending in different directions inclined with respect to an axial direction, and which have an opening side on a rotation direction side of the floating bush, and the bush side oil supply hole communicates with an intersecting portion between the two groove portions.

In such a configuration, the bush side oil supply hole is in communication with the intersecting portion between the two groove portions where the lubricating oil is easily collected. Thus, even higher oil supply characteristics on the inner side of the floating bush can be achieved.

A supercharger according to at least one embodiment of the present invention includes: a rotation shaft; a compressor rotor coupled to one end portion of the rotation shaft; and the floating bush bearing device which rotatably supports the rotation shaft according to any one of the embodiments.

Thus, the supercharger including the floating bush bearing device with excellent oscillation stability and small bearing loss can be formed.

### Advantageous Effects

With at least one embodiment of the present invention, a floating bush bearing device with excellent oscillation stability and small bearing loss, and a supercharger including the floating bush bearing device can be provided.

### BRIEF DESCRIPTION OF DRAWINGS

FIG. 1 is a cross-sectional view of a floating bush bearing device according to an embodiment of the present invention.
FIGs. 2A and 2B are diagrams for schematically illustrating a recess portion formed in an inner circumferential surface of a bearing housing.
FIG. 3 is a cross-sectional view of a modification of the floating bush bearing device according to the embodiment of the present invention.
FIG. 4 is a cross-sectional view of a modification of the floating bush bearing device not forming part of the present invention.
FIG. 5 is a cross-sectional view of a modification of the floating bush bearing device not forming part of the present invention.
FIG. 6 is a cross-sectional view of a modification of the floating bush bearing device not forming part of the present invention.
FIG. 7 is a vertical cross-sectional view of a floating bush of a floating bush according to an embodiment of the present invention.
FIG. 8 is an outer view of a floating bush not forming part of the present invention.
FIG. 9 is a diagram illustrating a modification of the floating bush illustrated in FIG.8
FIG. 10 is a schematic view of an embodiment of a supercharger including the floating bush bearing device according to the present invention.
FIG. 11 is a schematic view of an embodiment of a supercharger including the floating bush bearing device according to the present invention.

### DETAILED DESCRIPTION

Embodiments of the present invention are described in detail with reference to the drawings. It is intended, however, that the scope of the present invention is not limited to the embodiments described above. Dimensions, materials, shapes, relative positions, and the like of components described in the embodiments shall be interpreted as illustrative only and not limitative of the scope of the present invention unless otherwise specified.

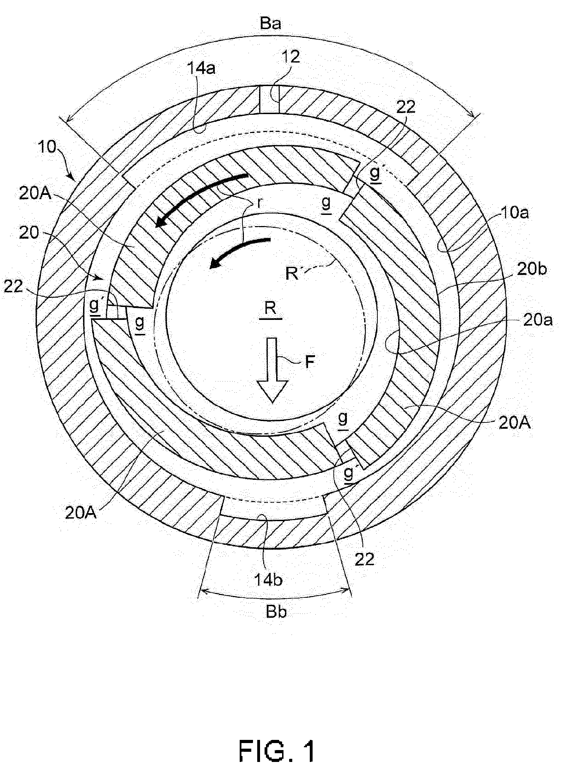

FIG. 1 is a cross-sectional view of a floating bush bearing device according to an embodiment of the present invention. A floating bush bearing device 1a according to the present embodiment includes a bearing housing 10 and a floating bush 20 as shown in FIG. 1, and rotatably supports a rotation shaft R.

The bearing housing 10 has a cylindrical cross-sectional shape as shown in FIG. 1, and has a first recess portion 14a formed at an upper side position in the figure, and a second recess portion 14b formed at a position in an inner circumferential surface 10a on the opposite side of the first recess portion 14a in a circumference direction. The first recess portion 14a and the second recess portion 14b are different from each other in area. In the bearing housing 10 of the present embodiment, the first recess portion 14a has a larger area. An arrow F in the figure indicates a load direction of the rotation shaft R. The second recess portion 14b is formed at a portion of the inner circumferential surface 10a of the bearing housing on a side of a load direction F.

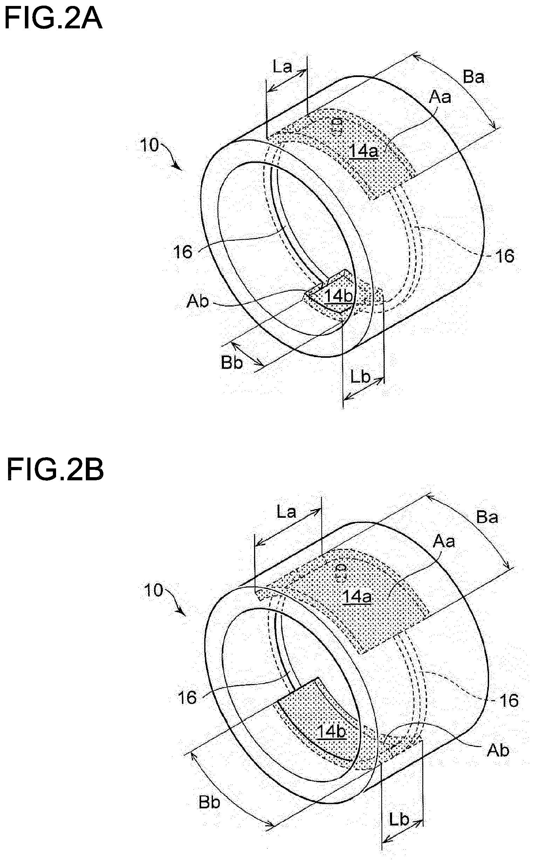

As shown in FIG. 2A, in the bearing housing 10 shown in FIG. 1, a width Ba of the first recess portion 14a is larger than a width Bb of the second recess portion 14b. A length La of the first recess portion 14a is the same as a length Lb of the second recess portion 14b. Thus, an area Aa of the first recess portion 14a is larger than an area Ab of the second recess portion 14b.

Alternatively, as shown in FIG. 2B, Ba and Bb may be the same when La > Lb holds true so that the first recess portion 14a has a larger area.

As shown in FIGs. 2A and 2B, the first recess portion 14a and the second recess portion 14b are connected to each other through an oil groove16 which extends in a circumference direction and is formed in the inner circumferential surface10a of the bearing housing.

As shown in FIG. 1, a housing side oil supply hole 12 extending in a radial direction is formed through the bearing housing 10. Pressurized lubricating oil is supplied between an outer circumferential surface 20b of the floating bush 20 and the inner circumferential surface 10a of the bearing housing 10 through the housing side oil supply hole 12, whereby an oil film is formed between the outer circumferential surface 20b and the inner circumferential surface 10a.

The housing side oil supply hole 12 is in communication with the first recess portion 14a with a larger area, and the lubricating oil is supplied to the second recess portion 14b through the oil groove16 described above and the clearance between the inner circumferential surface 10a and the outer circumferential surface 20a of the floating bush. Thus, an oil pressure at the first recess portion 14a is higher than an oil pressure at the second recess portion 14b. As described above, the first recess portion 14a has a larger area than the second recess portion 14b. Thus, an oil supply pressure for pushing down the floating bush 20 by the first recess portion 14a (the oil pressure at the first recess portion 14a × the area of the first recess portion 14a) is larger than an oil supply pressure for pushing up the floating bush 20 by the second recess portion 14b (the oil pressure at the second recess portion 14b × the area of the second recess portion 14b).

As shown in FIG. 1, the floating bush 20 is disposed between the rotation shaft R and the inner circumferential surface 10a of the bearing housing 10 in the bearing housing 10. The floating bush 20 is disposed in the bearing housing 10 to be rotatable in a direction indicated by an arrow r in FIG. 1, together with the rotation shaft R.

As shown in FIG. 1, the floating bush 20 has a multi-arc shape formed by combining three arc portions 20A having the inner circumferential surfaces 20a with different center points. A gap portion g between the rotation shaft having a predetermined clearance or larger is formed between the rotation shaft R and an inner circumferential surface 20a of the floating bush 20 regardless of the relative positions between the rotation shaft R and the inner circumferential surface 20a of the floating bush 20, that is, even when the rotation shaft R, having a circular cross-sectional shape, moves in the floating bush 20, as illustrated in a two-dotted dashed line in the figure.

As shown in FIG. 1, a bush side oil supply hole 22, extending in the radial direction, is formed through the floating bush 20, and is in communication with the gap portion g described above. The lubricating oil, supplied into the clearance between the outer circumferential surface 20b of the floating bush and the inner circumferential surface 10a of the bearing housing, is further supplied into the clearance between the rotation shaft R and the inner circumferential surface 20a of the floating bush through a bush side oil supply hole 2. Thus, the oil film is formed in the clearances. The bush side oil supply hole 22 is in communication with the gap portion g as described above, whereby the lubricating oil is stably supplied to the inner side of the floating bush 20 regardless of the position of the rotation shaft R.

As shown in FIG. 1, the three arc portions 20A have the outer circumferential surfaces 20b with different center points. A gap portion g', having a predetermined clearance or larger regardless of the position of the floating bush 20, is formed between the inner circumferential surface 10a of the bearing housing 10 and the outer circumferential surface 20b of the floating bush 20. The bush side oil supply hole 22 described above is in communication with the gap portion g'. Thus, the lubricating oil is stably supplied to the inner side of the floating bush 20 regardless of the position of the floating bush 20.

As described above, in the floating bush bearing device 1a according to the present embodiment having the configuration described above, the inner circumferential surfaces 20a of the floating bush 20 define a non-circular shape with the multi-arc shape. Thus, the clearance between the inner circumferential surface 20a of the floating bush 20 and the rotation shaft R is non-uniform in the circumference direction, and the gap portion g, having the predetermined clearance or larger regardless of the relative positions between the inner circumferential surface 20a of the floating bush 20 and the rotation shaft R, is formed. Thus, a cross section is reduced with respect to a bearing dynamic characteristic direct section, whereby the oscillation stability of the bearing device can be improved. Furthermore, a larger average clearance between the rotation shaft R and the inner circumferential surface 20a of the floating bush 20 can be achieved, whereby a bearing loss can be reduced compared with a case where the inner circumferential surface 20a of the floating bush has a perfect circle shape.

As described above, the bush side oil supply hole 22 is in communication with the gap portion g. Thus, the oil supply characteristics on the inner side of the floating bush 20 can be improved, whereby the oscillation stability can be improved and furthermore, the bearing loss can be reduced.

As described above, the housing side oil supply hole 12 is in communication with the first recess portion 14a having a larger area. Thus, the floating bush 20 is pushed toward the second recess portion 14b, due to the difference between the two recess portions of the first recess portion 14a and the second recess portion 14b in the oil supply pressure. As a result, a higher eccentricity ratio of the floating bush 20 is achieved, whereby higher oscillation stability can be achieved.

As described above, the recess portions are respectively formed on a load direction side of the rotation shaft R and the side opposite to the load direction side. Thus, the first recess portion 14a and the second recess portion 14b each function as an oil reservoir, whereby higher oil supply characteristics on the inner side of the floating bush 20 can be achieved.

As described above, the first recess portion 14a and the second recess portion 14b are connected to each other through the oil groove 16. Thus, the lubricating oil can be further supplied into the second recess portion 14b, which is not in communication with the housing side oil supply hole 12, through the oil groove 16, whereby higher oil supply characteristics on the inner side of the floating bush 20 can be achieved.

In the embodiment described above, the housing side oil supply hole 12 is in communication with the first recess portion 14a, which is formed on the opposite side of the side of the load direction F of the rotation shaft R. Thus, the rotation shaft R is further pushed in the load direction F thereof due to the above-described difference between the first recess portion 14a and the second recess portion 14b in the oil supply pressure. As a result, even higher eccentricity ratio of the floating bush 20 can be achieved, whereby the oscillation stability of the bearing can be improved.

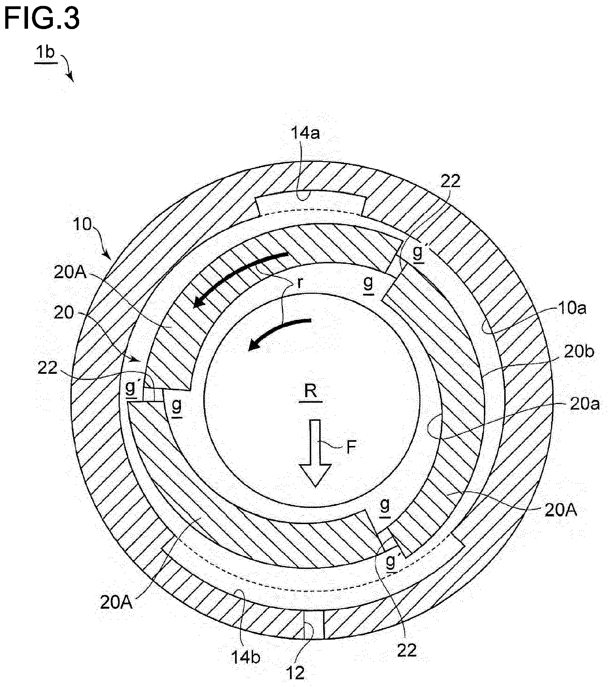

On the other hand, the housing side oil supply hole 12 may be in communication with the second recess portion 14b formed on the side of the load direction F of the rotation shaft R as in a floating bush bearing device 1b shown in FIG. 3. In this configuration in which the housing side oil supply hole 12 is in communication with the second recess portion 14b on the side of the load direction F of the rotation shaft R, floating of the floating bush 20 is achieved by the pressurized lubricating oil supplied from the housing side oil supply hole 12. Thus, the oil film is swiftly formed in the clearance between the inner circumferential surface 10a of the bearing housing 10 and the outer circumferential surface 20b of the floating bush 20, whereby the bearing loss at the time of the rotation start can be reduced and the startability can be improved.

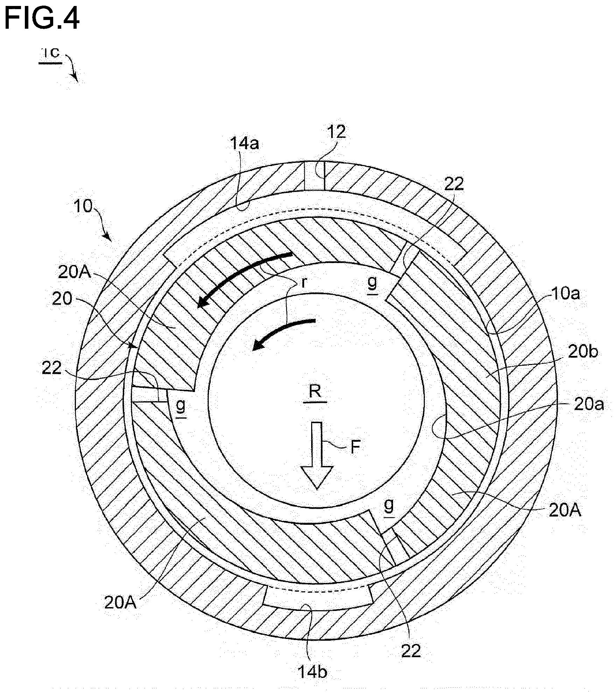

In the embodiment described above, the clearance between the inner circumferential surface 10a of the bearing housing 10 and the outer circumferential surface 20b of the floating bush 20 is non-uniform in the circumference direction, and the gap portion g' is formed in the clearance between the inner circumferential surface 10a of the bearing housing 10 and the outer circumferential surface 20b of the floating bush 20. In a floating bush bearing device 1c illustrated in FIG. 4 the clearance between the inner circumferential surface 10a of the bearing housing 10 and the outer circumferential surface 20b of the floating bush 20 may be uniform in the circumference direction, the clearance between the rotation shaft R and the inner circumferential surface 20a of the floating bush 20 is non-uniform, and the gap portion g is formed in the clearance between rotation shaft R and the inner circumferential surface 20a of the floating bush 20.

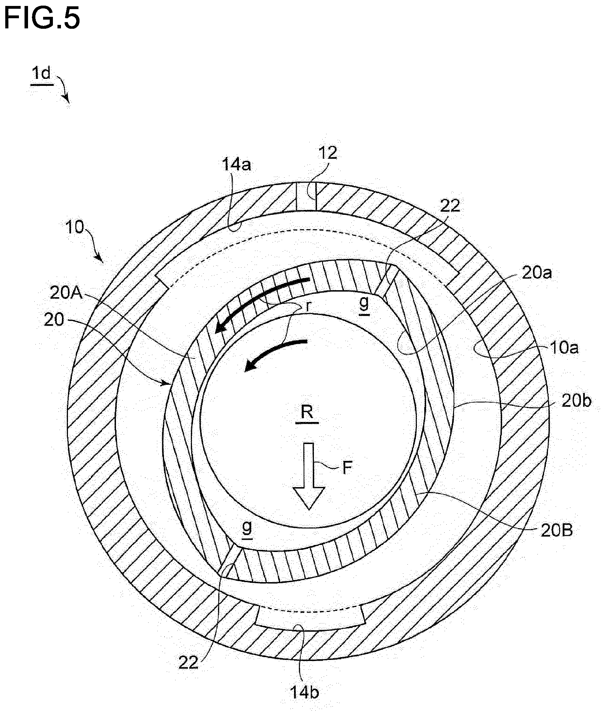

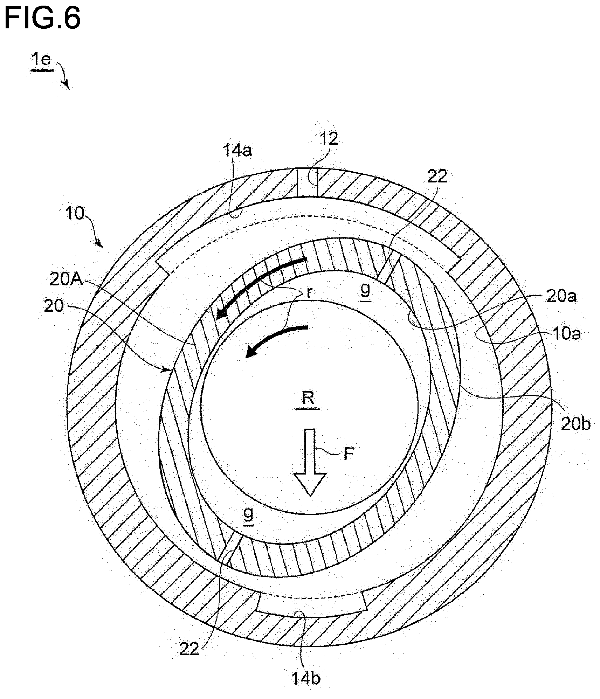

In the embodiment described above, the floating bush 20 has the multi-arc shape formed by combining the three circular-arc portions 20A having the inner circumferential surfaces 20a with different center points. However, the floating bush bearing device 1 according to the present invention is not limited to this. Any number of circular-arc portions may be combined as appropriate. The number of the circular-arc portions to be combined is preferably two to five for the sake of productivity. FIG. 5 shows an example not forming part of the invention of a floating bush bearing device id including the floating bush 20 formed by combining two circular-arc portions 20B having the inner circumferential surfaces 20a with different center points. The inner circumferential surface 20a of the floating bush 20 may have an elliptical shape, as in a floating bush bearing device 1e shown in FIG. 6.

In such a configuration, the inner circumferential surface 20a of the floating bush 20 described above can geometrically easily be formed to have a non-circular shape. Furthermore, for example, the clearance between the rotation shaft R and the inner circumferential surface 20a of the floating bush 20 can be more gently changed, compared with a case where the inner circumferential surface 20a of the floating bush 20 has recesses and protrusions.

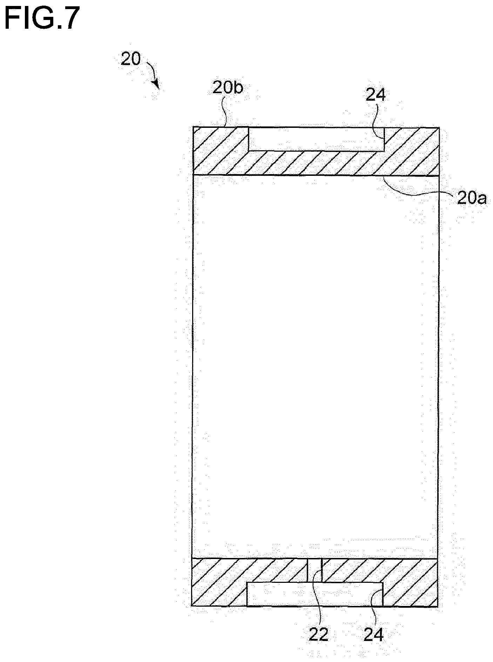

FIG. 7 is a vertical cross-sectional view of a floating bush of a floating bush according to an embodiment of the present invention. The floating bush 20 according to the present embodiment has basically the same configuration as the floating bush 20 in the embodiment described above. The same components are denoted with the same reference numerals and the detail description thereof will be omitted.

In the floating bush 20 according to the present embodiment, a circumference direction groove 24 is formed along the circumference direction in the outer circumferential surface 20b as shown in FIG. 7. Preferably, the circumference direction groove 24 is formed over the entire circumference of the outer circumferential surface 20b. However, there may be a portion where the circumference direction groove 24 is not formed in the circumference direction. The number of the circumference direction grooves 24 is not particularly limited. In the example shown in FIG. 7, a single circumference direction groove 24 is continuously formed over the entire circumference of the outer circumferential surface 20b of the floating bush 20 for example.

Such a circumference direction groove 24 can reduce a friction torque on the outer circumferential surface 20b of the floating bush 20 so that the rotation speed of the floating bush 20 increases, whereby the bearing loss on the inner side of the floating bush 20 can be reduced. The circumference direction groove 24 provides a squeezing effect to achieve higher reduction effect of the lubricating oil. All things considered, the oscillation stability is improved.

As shown in FIG. 7, the bush side oil supply hole 22 described above may be in communication with the circumference direction groove 24. Thus, the oil supply characteristics on the inner side of the floating bush 20 can be improved, the oscillation stability can be improved and the bearing loss can be reduced.

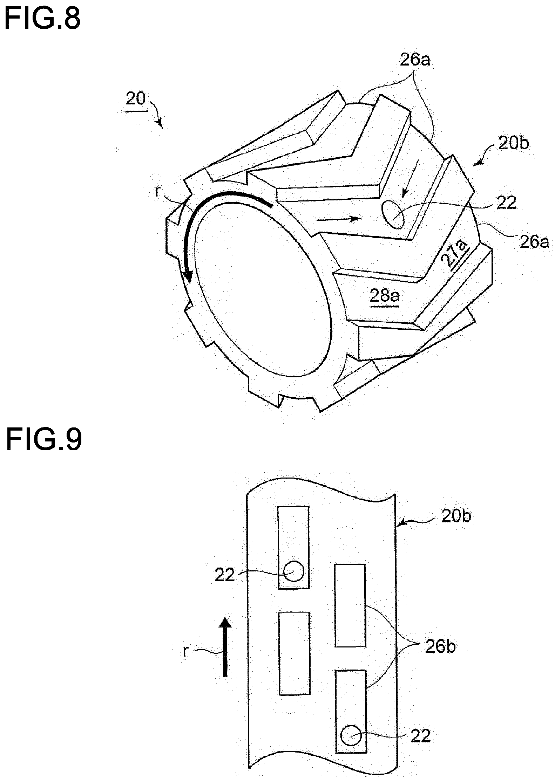

FIG. 8 is an outer view of a floating bush not forming part of the present invention. The floating bush 20 in this example has basically the same configuration as the floating bush 20 in the embodiments described above. The same components are denoted with the same reference numerals and the detail description thereof will be omitted.

As shown in FIG. 8, in the floating bush 20, a plurality of partial grooves 26a are formed in the outer circumferential surface 20b. The partial groove 26a has a V shape in a plan view formed by two groove portions 27a and 28a, extending in different directions inclined with respect to an axial direction, intersecting with each other. The partial groove 26a has an opening side of a V shape on the rotation direction side in the rotation direction r of the floating bush 20. The bush side oil supply hole 22 described above is in communication with the intersecting portion between the two groove portions 27a and 28a.

In such a configuration, the lubricating oil can be easily collected in the intersecting portion through the groove portions 27a and 28a, when the floating bush 20 rotates. The bush side oil supply hole 22 is in communication with the intersecting portion in which the lubricating oil is easily collected. Thus, even higher oil supply characteristics on the inner side of the floating bush 20 can be achieved.

The example of the partial groove 26 is not limited to the example of the partial groove 26a shown in FIG. 8. For example, as shown in FIG. 9, an example where elongated partial grooves 26b have a longitudinal direction extending along the circumference direction, and may form a staggered pattern may be employed. Here, as shown in FIG. 9, the bush side oil supply hole 22 is in communication with the elongated partial groove 26b at a position on an opposite side of the rotation direction r of the floating bush 20. Thus, the lubricating oil can be easily collected in the bush side oil supply hole 22 when the floating bush 20 rotates, whereby even higher oil supply characteristics on the inner side of the floating bush 20 can be achieved.

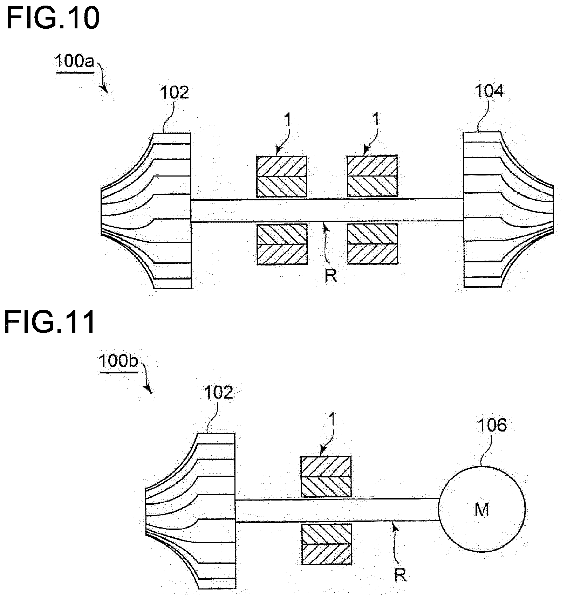

FIG. 10 is a schematic view of an embodiment of a supercharger including the floating bush bearing device according to the present invention. As shown in FIG. 10, a supercharger 100 according to the present embodiment is formed as a turbocharger 100a including the rotation shaft R, a compressor rotor 102 and a turbine rotor 104 that are respectively coupled to both end portions of the rotation shaft R, and the floating bush bearing device 1 described above rotatably supports the rotation shaft R.

The compressor rotor 102 is disposed in an intake path of an engine, and the turbine rotor 104 is disposed in an exhaust path of the engine. The turbine rotor 104 is rotated by exhaust gas from the engine, and the compressor rotor 102 is coaxially operated in response to the rotation. Thus, air flowing in the intake path is compressed, whereby turbocharged air is supplied to the engine.

In such a configuration, the turbocharger 100a including the floating bush bearing device with excellent oscillation stability and small bearing loss can be provided.

The supercharger 100 according to the present invention is not limited to the turbocharger 100a described above. As shown in FIG. 11, an electric supercharger 100b may be formed that includes an electric motor 106 instead of the turbine rotor 104. Here, the compressor rotor 102 is driven when the rotation shaft R is rotated by the electric motor 106.

The preferred embodiment of the present invention are described above. However, the present invention is not limited to the embodiments described above, and various modifications may be made without departing from the object of the present invention defined by the appended claims.

### Industrial applicability

At least one embodiment of the present invention is suitably used, as a floating bush bearing device that rotatably supports a rotation shaft, in a small supercharger mounted in an automobile engine for example.

### Reference Signs List

- 1, 1a to 1e: floating bush bearing device
- 10: bearing housing
- 10a: inner circumferential surface of bearing housing
- 12: housing side oil supply hole
- 14a, 14b: recess portion
- 16 oil: groove
- 20: floating bush
- 20a: circumferential surface of floating bush inner
- 20b: outer circumferential surface of floating bush
- 20A, 20B: arc portion
- 22: bush side oil supply hole
- 24: circumference direction groove
- 26a, 26b: partial groove
- 27a, 28a: groove portion
- 100: supercharger
- 100a: turbocharger
- 100b: electric supercharger
- 102: compressor rotor
- 104: turbine rotor
- 106: electric motor

## Claims

1. A floating bush bearing device (1, 1a to 1e) which rotatably supports a rotation shaft (R), the floating bush bearing device (1, 1a to 1e) comprising:
a bearing housing (10);
a floating bush (20) rotatably disposed between the rotation shaft (R) and an inner circumferential surface (10a) of the bearing housing (10), in the bearing housing (10); and
a bush side oil supply hole (22) extending in a radial direction which is formed through the floating bush (20) and is capable of supplying lubricating oil between the rotation shaft (R) and the inner circumferential surface (20a) of the floating bush (20), wherein an inner circumferential surface (20a) of the floating bush (20) has a multi-arc shape formed by combining a plurality of circular-arcs (20A), with different center points so that a gap portion (g) is formed between the rotation shaft (R) and the inner circumferential surface (20a) of the floating bush (20), the gap portion (g) having a predetermined clearance or larger regardless of relative positions of the rotation shaft (R) and the inner circumferential surface (20a) of the floating bush (20),
**characterised in that**
an outer circumferential surface (20b) of the floating bush (20) has a multi-arc shape formed by combining a plurality of circular-arcs (20A), with different center points so that a gap portion (g') is formed between the inner circumferential surface (10a) of the bearing housing (10) and the outer circumferential surface (20b) of the floating bush (20), said gap portion (g') having a predetermined clearance or larger regardless of the position of the floating bush (20), and
the bush side oil supply hole (22) extending in the radial direction communicates with the gap portion (g), that is formed between the rotation shaft (R) and the inner circumferential surface (20a) of the floating bush (20) and with the gap portion (g'), that is formed between the inner circumferential surface (10a) of the bearing housing (10) and the outer circumferential surface (20b) of the floating bush (20), so that a lubricating oil is stably supplied to the inner side of the floating bush (20) regardless of the position of the rotation shaft (R) and the floating bush (20).

2. The floating bush bearing device (1, 1a to 1e) according to claim 1, wherein
recess portions (14a, 14b), having different areas, are respectively formed on a load direction side of the rotation shaft (R) and a side opposite to the load direction side, in the inner circumferential surface (10a) of the bearing housing (10), and
one of the recess portions (14a, 14b) with a larger area communicates with a housing side oil supply hole (12) which is formed through the bearing housing (10) and is capable of supplying lubricating oil between an outer circumferential surface (20b) of the floating bush (20) and the inner circumferential surface (10a) of the bearing housing (10).

3. The floating bush bearing device (1, 1a to 1e) according to claim 2, wherein an oil groove (16) is formed in the inner circumferential surface (10a) of the bearing housing (10), the oil groove (16) connecting between the two recess portions (14a, 14b) respectively formed on the load direction side of the rotation shaft (R) and the side opposite to the load direction side.

4. The floating bush bearing device (1, 1a to 1e) according to claim 2 or 3, wherein the housing side oil supply hole (12) communicates with a first recess portion (14a) formed on the side opposite to the load direction side of the rotation shaft (R) in the inner circumferential surface (10a) of the bearing housing (10).

5. The floating bush bearing device (1, 1a to 1e) according to claim 2 or 3, wherein the housing side oil supply hole (12) communicates with a second recess portion (14b) on the load direction side of the rotation shaft in the inner circumferential surface (10a) of the bearing housing (10).

6. The floating bush bearing device (1, 1a to 1e) according to any one of claims 1 to 5, wherein a circumference direction groove (24), extending along a circumference direction, is formed in the outer circumferential surface (20b) of the floating bush (20).

7. The floating bush bearing device (1, 1a to 1e) according to any one of claims 1 to 5, wherein a plurality of partial grooves (26a, 26b) are formed in the outer circumferential surface (20b) of the floating bush (20), and the bush side oil supply hole (22) communicates with the partial holes.

8. The floating bush bearing device (1, 1a to 1e) according to claim 7, wherein
the partial grooves (26a, 26b) have a V shape in a plan view formed by two groove portions (27a, 28a) intersecting with each other, each of two groove portions (27a, 28a) extending in different directions inclined with respect to an axial direction, and which have an opening side on a rotation direction side of the floating bush (20), and
the bush side oil supply hole (22) communicates with an intersecting portion between the two groove portions (27a, 28a).

9. A supercharger (100a, 100b) comprising:
a rotation shaft (R);
a compressor rotor (102) coupled to one end portion of the rotation shaft(R); and
the floating bush bearing device (1, 1a to 1e) which rotatably supports the rotation shaft (R) according to any one of claims 1 to 8.

## Patentansprüche

1. Eine schwimmende Buchsenlagervorrichtung (1, 1a bis 1e), die eine Drehwelle (R) drehbar lagert, die schwimmende Buchsenlagervorrichtung (1, 1a bis 1e) umfassend:
ein Lagergehäuse (10);
eine schwimmende Buchse (20), welche drehbar zwischen der Drehwelle (R) und einer inneren Umfangsfläche (10a) von dem Lagergehäuse (10) in dem Lagergehäuse (10) angeordnet ist; und
ein buchsenseitiges Ölzufuhrloch (22), das durch die schwimmende Buchse (20) in radialer Richtung ausgebildet ist und in der Lage ist Schmieröl zwischen der Drehwelle (R) und der inneren Umfangsfläche (20a) von der schwimmenden Buchse (20) bereitzustellen, wobei
eine innere Umfangsfläche (20a) von der schwimmenden Buchse (20) eine mehrbogige Gestalt aufweist, die dadurch geformt ist, dass mehrere kreisförmige Bögen (20A) mit unterschiedlichen Mittelpunkten kombiniert sind, sodass ein Lückenabschnitt (g) zwischen der Drehwelle (R) und der inneren Umfangsfläche (20a) von der schwimmenden Buchse (20) ausgebildet ist, wobei der Lückenabschnitt (g) ein vorbestimmtes Spiel oder größer aufweist ohne Rücksicht auf die relativen Positionen von der Drehwelle (R) und der inneren Umfangsfläche (20a) von der schwimmenden Buchse (20), **dadurch gekennzeichnet, dass**
eine äußere Umfangsfläche (20b) von der schwimmenden Buchse (20) eine mehrbogige Gestalt aufweist, die dadurch geformt ist, dass mehrere kreisförmige Bögen (20A) mit unterschiedlichen Mittelpunkten kombiniert sind, sodass ein Lückenabschnitt (g') zwischen der inneren Umfangsfläche (10a) von dem Lagergehäuse (10) und der äußeren Umfangsfläche (20b) der schwimmenden Buchse (20) ausgebildet ist, wobei dieser Lückenabschnitt (g') ein vorbestimmtes Spiel oder größer aufweist ohne Rücksicht auf die relativen Position von der schwimmenden Buchse (20), und dadurch dass
sich das buchsenseitige Ölzufuhrloch (22) in radialer Richtung erstreckt und mit dem Lückenabschnitt (g) in Verbindung steht, welcher zwischen der Drehwelle (R) und der inneren Umfangsfläche (20a) von der schwimmenden Buchse (20) ausgebildet ist und mit dem Lückenabschnitt (g'), der zwischen der inneren Umfangsfläche (10a) von dem Lagergehäuse (10) und der äußeren Umfangsfläche (20b) der schwimmenden Buchse (20) ausgebildet ist, sodass Schmieröl stetig an die Innenseite der schwimmenden Buchse (20) bereitgestellt wird, ohne Rücksicht auf die Position von der Drehwelle (R) und der schwimmenden Buchse (20).

2. Die schwimmende Buchsenlagervorrichtung (1, 1a bis 1e) nach Anspruch 1, wobei
Vertiefungsabschnitte (14a, 14b), die unterschiedliche Bereiche aufweisen, die jeweils auf einer Lastrichtungsseite der Drehwelle (R) und einer Seite gegenüber der Lastrichtungsseite in der inneren Umfangsfläche (10a) des Lagergehäuses (10) geformt sind, und wobei
einer der Vertiefungsabschnitte (14a, 14b) mit einer größeren Fläche mit einem gehäuseseitigen Ölzufuhrloch (12), das durch das Lagergehäuse (10) gebildet ist und in der Lage ist, Schmieröl zwischen einer äußeren Umfangsfläche (20b) von der schwimmenden Buchse (20) und der innere Umfangsfläche (10a) des Lagergehäuses (10) bereitzustellen.

3. Die schwimmende Buchsenlagervorrichtung (1, 1a bis 1e) nach Anspruch 2, wobei eine Ölnut (16) in der inneren Umfangsfläche (10a) von dem Lagergehäuse (10) ausgebildet ist, wobei die Ölnut (16) verbindend zwischen den zwei Vertiefungsabschnitten (14a, 14b) jeweils ausgebildet auf der Lastrichtungsseite der Drehwelle (R) und der Seite gegenüber zur Lastrichtungsseite ist.

4. Die schwimmende Buchsenlagervorrichtung (1, 1a bis 1e) nach Anspruch 2 oder 3, wobei das gehäuseseitige Ölzufuhrloch (12) mit einem ersten Vertiefungsabschnitt (14a), ausgebildet auf der Seite gegenüber zur Lastrichtungsseite von der Drehwelle (R) in der inneren Umfangsfläche (10a) von dem Lagergehäuse (10) kommuniziert.

5. Die schwimmende Buchsenlagervorrichtung (1, 1a bis 1e) nach Anspruch 2 oder 3, wobei das gehäuseseitige Ölzufuhrloch (12) mit einem zweiten Vertiefungsabschnitt (14b) auf der Lastrichtungsseite von der Drehwelle in der inneren Umfangsfläche (10a) von dem Lagergehäuse (10) kommuniziert.

6. Die schwimmende Buchsenlagervorrichtung (1, 1a bis 1e) nach einem der Ansprüche 1 bis 5, wobei eine Nut (24) in Umfangsrichtung, sich erstreckend entlang einer Umfangsrichtung, ausgebildet ist in der äußeren Umfangsfläche (20b) von der schwimmenden Buchse (20).

7. Die schwimmende Buchsenlagervorrichtung (1, 1a bis 1e) nach einem der Ansprüche 1 bis 5, wobei eine Vielzahl von Teilnuten (26a, 26b) ausgebildet sind in der äußeren Umfangsfläche (20b) von der schwimmenden Buchse (20), und das buchsenseitige Ölzufuhrloch (22) mit den Teillöchern kommuniziert.

8. Die schwimmende Buchsenlagervorrichtung (1, 1a bis 1e) nach Anspruch 7, wobei die Teilnuten (26a, 26b) eine V-Form in einer Draufsicht aufweisen, geformt durch zwei Nutbereiche (27a, 28a), die sich miteinander überschneiden, jeder der zwei Nutbereiche (27a, 28a) erstreckt sich in verschiedenen Richtungen, die bezüglich einer axialen Richtung geneigt sind, und die eine Öffnungsseite auf einer Drehrichtungsseite von der schwimmenden Buchse (20) haben, und wobei
das buchsenseitige Ölzufuhrloch (22) mit einem überschneidenden Bereich zwischen den beiden Nutbereichen (27a, 28a) kommuniziert.

9. Ein Turbolader (100a, 100b), umfassend:
eine Drehwelle (R);
einen Verdichterrotor (102), angekoppelt an einen Endabschnitt von der Drehwelle (R); und
die schwimmende Buchsenlagervorrichtung (1, 1a bis 1e), die die Drehwelle (R) drehbar lagert, gemäß einem der Ansprüche 1 bis 8.

## Revendications

1. Un dispositif de palier à douille flottante (1, 1a à 1e) qui supporte à rotation un arbre tournant (R), le dispositif de palier à douille flottante (1, 1a à 1e) comprenant :
un boitier de palier (10) ;
une douille flottante (20) disposée, dans le boitier de palier (10), à rotation entre l'arbre tournant (R) et une surface circonférentielle interne (10a) du boitier de palier (10) ; et
un orifice de délivrance d'huile côté douille (22) s'étendant dans une direction radiale qui est formée au travers de la douille flottante (20) et qui est capable de délivrer de l'huile de lubrification entre l'arbre tournant (R) et la surface circonférentielle interne (20a) de la douille flottante (20), dans lequel
une surface circonférentielle interne (20a) de la douille flottante (20) présente une forme d'arcs multiples obtenue par une combinaison d'une pluralité d'arcs de cercle (20A) ayant des centres différents de manière à former une partie d'intervalle (g) entre l'arbre tournant (R) et la surface circonférentielle interne (20a) de la douille flottante (20), ladite partie d'intervalle (g) présentant un jeu prédéterminé ou supérieur de façon indépendante des positions relatives de l'arbre tournant (R) et de la surface circonférentielle interne (20a) de la douille flottante (20),
**caractérisé en ce qu'**une surface circonférentielle externe (20b) de la douille flottante (20) possède une forme en arcs multiples obtenue par une combinaison d'une pluralité d'arcs de cercle (20A) ayant des centres différents de manière à former une partie d'intervalle (g') entre la surface circonférentielle interne (10a) du boîtier de palier (10) et la surface circonférentielle externe (20b) de la douille flottante (20), ladite partie d'intervalle (g') présentant un jeu prédéterminé ou supérieur de façon indépendante de la position de la douille flottante (20), et
l'orifice de délivrance d'huile côté douille (22) s'étendant dans la direction radiale communique avec la partie d'intervalle (g), qui est formée entre l'arbre tournant (R) et la surface circonférentielle interne (20a) de la douille flottante (20) et avec la partie d'intervalle (g') qui est formée entre la surface circonférentielle interne (10a) du boîtier de palier (10) et la surface circonférentielle externe (20b) de la douille flottante (20), de sorte qu'une huile de lubrification soit délivrée de manière stable du côté intérieur de la douille flottante (20) de façon indépendante de la position de l'arbre tournant (R) et de la douille flottante (20).

2. Le dispositif de palier à douille flottante (1, 1a à 1e) selon la revendication 1, dans lequel
des parties en creux (14a, 14b), présentant des surfaces différentes, sont formées respectivement sur un côté de direction de charge de l'arbre tournant (R) et d'un côté opposé au côté de direction de charge, dans la surface circonférentielle interne (10a) du boitier de palier (10), et
l'une des parties en creux (14a, 14b) qui présente une plus grande surface communique avec un orifice de délivrance d'huile côté boitier (12) qui est formé au travers du boitier de palier (10) et qui est capable de délivrer de l'huile de lubrification entre une surface circonférentielle externe (20b) de la douille flottante (20) et la surface circonférentielle interne (10a) du boitier de palier (10).

3. Le dispositif de palier à douille flottante (1, 1a à 1e) selon la revendication 2, dans lequel une gorge à huile (16) est formée dans la surface circonférentielle interne (10a) du boitier de palier (10), la gorge à huile (16) se rejoignant aux deux parties en creux (14a, 14b) formées respectivement du côté de la direction de charge de l'arbre tournant (R) et du côté opposé au côté de la direction de charge.

4. Le dispositif de palier à douille flottante (1, 1a à 1e) selon la revendication 2 ou 3, dans lequel l'orifice de délivrance d'huile côté boitier (12) communique avec une première partie en creux (14a) formée sur le côté opposé au côté de la direction de charge de l'arbre tournant (R) dans la surface circonférentielle interne (10a) du boitier de palier (10).

5. Le dispositif de palier à douille flottante (1, 1a à 1e) selon la revendication 2 ou 3, dans lequel l'orifice de délivrance d'huile côté boitier (12) communique avec une seconde partie en creux (14b) sur le côté de la direction de charge de l'arbre tournant dans la surface circonférentielle interne (10a) du boitier de palier (10).

6. Le dispositif de palier à douille flottante (1, 1a à 1e) selon l'une des revendications 1 à 5, dans lequel une gorge en direction de circonférence (24), s'étendant le long d'une direction de circonférence, est formée dans la surface circonférentielle externe (20b) de la douille flottante (20).

7. Le dispositif de palier à douille flottante (1, 1a à 1e) selon l'une des revendications 1 à 5, dans lequel une pluralité de gorges partielles (26a, 26b) sont formées dans la surface circonférentielle externe (20b) de la douille flottante (20), et l'orifice de délivrance d'huile côté douille (22) communique avec les orifices partiels.

8. Le dispositif de palier à douille flottante (1, 1a à 1e) selon la revendication 7, dans lequel
les gorges partielles (26a, 26b) présentent une forme en V dans une vue en plan formée par deux parties de gorges (27a, 28a) qui forment une intersection (13), chacune des deux parties de gorges (27a, 28a) s'étendant dans des directions différentes inclinées par rapport à une direction axiale, et qui présentent un côté d'ouverture sur un côté de direction de rotation de la douille flottante (20), et
l'orifice de délivrance d'huile côté douille (22) communique avec une partie d'intersection entre les deux parties de gorges (27a, 28a).

9. Un suralimenteur (100a, 100b) comprenant :
un arbre tournant (R) ;
un rotor de compresseur (102) couplé à une partie d'extrémité de l'arbre tournant (R) ; et
le dispositif de palier à douille flottante (1, 1a à 1e), qui supporte à rotation l'arbre tournant (R), selon l'une des revendications 1 à 8.
